# FASCICULE DE BREVET EUROPEEN

(11) **EP 3 126 311 B1**
(45) Date de publication et mention de la délivrance du brevet: **18.07.2018**
(21) Numéro de dépôt: 14723459.5
(22) Date de dépôt: 01.04.2014
(51) Int. Cl.: C05D 9/00, C05G 3/00

(54) **PRODUIT FERTILISANT A LIBERATION RETARDEE, PROCEDES DE FABRICATION ET D'EPANDAGE**
DÜNGUNGSPRODUKT MIT VERZÖGERTER FREISETZUNG, HERSTELLUNGS- UND VERTEILUNGSVERFAHREN
DELAYED RELEASE FERTILISING PRODUCT, MANUFACTURING AND SPREADING METHODS

(43) Date de publication de la demande: 08.02.2017
(73) Titulaire: Agro Innovation International, 35400 Saint-Malo (FR)
(72) Inventeur: ALIS, Yves, F-35400 Saint-Malo (FR); BLANDIN, Anne-Françoise, F-35730 Pleurtuit (FR); ERRO, Javier, 31006 Pamplona Navarra (ES); GARCIA-MINA, José-Maria, 31170 Iza Navarra (ES); JACQUOT, Vincent, F-35400 Saint-Malo (FR); URRUTIA, Oscar, 31004 Pamplona Navarra (ES); YVIN, Jean-Claude, F-35400 Saint-Malo (FR); ZABINI, André, 35400 Saint-Malo (FR)
(74) Mandataire: Chantraine, Sylvie Hélène
(86) Numéro de dépôt international: PCT/FR2014/050780
(87) Numéro de publication internationale: WO 2015/150645

(56) Documents cités:
- EP-A1- 0 918 045
- WO-A1-96/01794
- WO-A1-02/076718
- GB-A- 1 435 678
- KR-B1- 100 568 467
- US-A- 5 030 267
- US-A- 5 897 946

## Description

La présente invention concerne un produit fertilisant dont le profil de libération dans le sol par dissolution progressive est particulièrement bien adapté aux climats à pluviométrie intense ainsi qu'aux climats à pluviométrie élevée. L'invention a également pour objet un procédé de fabrication d'un tel engrais qui met en oeuvre une étape de granulation et une étape d'enrobage.

### Arrière-Plan technologique

Les engrais inorganiques sont en général très solubles dans l'eau, et risquent d'être rapidement lessivés dans le sol par les précipitations ou l'arrosage avant d'être absorbés par la plante.

Il est de ce fait difficile de maintenir l'effet d'un engrais sur une période relativement longue en raison de la perte de nutriments de l'engrais par lessivage. En outre, les cultures ont tendance à être endommagées par la libération rapide d'une quantité trop importante d'éléments nutritifs ou de sels dissous.

On recherche par conséquent des engrais à libération lente pour diminuer la perte des éléments nutritifs des engrais exposés à des grandes quantités d'eau.

A cet effet, il a été proposé d'enrober des engrais granulaires avec des revêtements organiques (résines, huiles) et/ou inorganiques (talc, ciment, terre de diatomée).

Il a été décrit par exemple dans le brevet US 5 630 861 l'enrobage d'engrais avec un mélange de ciment magnésien et d'huile. Des cristaux préalablement encapsulés par un ciment magnésien sont agglomérés par granulation/compression ou pelletisation conjointe des cristaux encapsulés avec la même solution de ciment magnésien. Les agglomérats obtenus sont de nouveau enrobés par la même solution de ciment magnésien et d'huile.

Dans la demande de brevet US 2011/0126602, des particules d'urée sont enrobées par pulvérisation d'une dispersion aqueuse d'une résine alkyde modifiée uréthane, puis avec une poudre de talc, de carbonate de calcium ou de terre de diatomées de moins de 5 microns de diamètre. Le brevet KR 100 568 467 B1 divulgue un engrais recouvert d'une double couche de polymère et de ciment. La première couche est composée d'un polymère sélectionné parmi les polyacryliques, styrène butadiène et les acétates de vinyléthylène. Après application de la première couche de polymère, celle-ce est séchée puis une seconde couche de ciment (Portland, laitier de fourneau) est appliquée.

Les demandes US 5 897 946 A1, WO 02/076718 A1 et GB 1 435 678 A divulguent des engrais à libération contrôlée comprenant une double couche de ciment et de polymère. Les inventeurs ont trouvé cependant qu'une deuxième couche constituée de talc selon l'enseignement de ce document ne permet pas de retarder efficacement la libération d'un engrais à base de potassium, en particulier lorsque le sol est soumis à des pluies intenses.

Le brevet US 4 023 955 a proposé l'enrobage d'urée par du ciment hydraté pour améliorer l'adhérence de l'enrobage sur l'engrais. La couche de ciment est recouverte d'une fine couche de latex pour éviter l'agglomération des particules enrobées de ciment qui sont très hygroscopiques.

Il subsiste néanmoins le besoin de développer des produits fertilisants à libération retardée, adaptés notamment aux régions où les sols subissent un lessivage important dû à des précipitations abondantes ou intenses. Les produits fertilisants à libération progressive permettent d'adapter la quantité de nutriments à la demande nutritive de la plante, et d'éviter des pics de concentration élevés en matière nutritive dans le sol en cas de pluviométrie élevée.

### Résumé de l'invention

La présente invention est basée sur les propriétés de dissolution dans l'eau de certaines résines, qui en font des candidats particulièrement bien adaptés à l'enrobage d'engrais pour moduler leur mise à disposition de la plante en fonction du volume de précipitations.

Selon un premier aspect, l'engrais à libération retardée comprend une première couche de résine, et une deuxième couche de ciment, de préférence non hydraté.

On entend par « libération retardée » au sens de l'invention que le profil de dissolution dans l'eau, dans une colonne de sol ou dans le sol de l'engrais enrobé, est modifié par rapport au profil de dissolution du même engrais non enrobé. Plus précisément, la vitesse de dissolution de l'engrais de l'invention est ralentie grâce à l'enrobage, si bien que la mise à disposition des éléments nutritifs du sol est contrôlée et modifiée, voire même prolongée dans le temps. Au surplus, la libération des éléments nutritifs dans l'eau peut être retardée dans le temps, au sens où des quantités significatives d'engrais ne sont libérées qu'à partir d'un certain temps à compter du début d'exposition de l'engrais enrobé à un milieu aqueux. Enfin, la libération de l'engrais de l'invention peut être avantageusement modulable en fonction des conditions météorologiques, en particulier en fonction du volume et/ou du débit des précipitations.

La résine est appliquée à la surface des particules d'engrais de préférence à partir d'une dispersion aqueuse de résine.

Selon un mode de réalisation particulier, l'engrais comprend un sel de potassium, et il est enrobé d'une première couche comprenant la résine polymère, puis d'une deuxième couche constituée d'un ciment, de préférence non hydraté.

### Résine

La résine présente l'avantage de se dégrader dans le sol et de se transformer en fragments biodégradables. Elle présente également l'avantage de pouvoir adapter l'effet de contrôle ou de retard de libération des engrais, en fonction des conditions environnementales et notamment de la pluviométrie.

La résine utilisée pour enrober l'engrais est de préférence sous la forme d'une dispersion aqueuse contenant par exemple entre 20 et 40% en poids d'eau, et éventuellement un autre solvant tel qu'un glycol.

Au sens de l'invention, on entend par « dispersion », une dispersion au sens stricte de particules de résine dans l'eau, ainsi qu'une émulsion contenant des particules de résine dispersées dans l'eau à l'aide d'un tensio-actif. Les mots dispersion et émulsion peuvent être utilisés l'un comme l'autre dans la suite de cette description.

La résine peut être choisie parmi les polysaccharides et les polyesters obtenus à partir de triglycérides naturels insaturés.

Un polysaccaride est par exemple choisi dans le groupe composé de la cellulose et de ses dérivés estérifiés (méthylcellulose, hydroxypropylméthylcellulose, éthylcellulose), des amidons et de leurs dérivés, des pectines et de leurs dérivés méthylés et des gommes telles que les carraghénanes, des alginates, de l'agar, de la gomme arabique, de la gomme xanthane, de la pullulane, de la gomme gellane et des chitosanes.

La résine est peut également être obtenue à partir d'une huile végétale et d'un composé choisi parmi les monomères vinyliques, les acides polycarboxyliques et les anhydrides.

Parmi les anhydrides, on citera l'anhydride maléique et l'anhydride phtalique. Parmi les acides polycarboxyliques, on citera l'acide citrique, l'acide succinique et l'acide polylactique.

Comme huile végétale ou triglycéride naturel insaturé, on peut citer l'huile de ricin, l'huile de palme, l'huile de maïs, l'huile de soja, l'huile de colza, l'huile de tournesol, l'huile de graine de sésame, l'huile d'arachide, l'huile de carthame, l'huile d'olive, l'huile de graine de coton, l'huile de lin, l'huile de noix et l'huile de tung et leurs mélanges.

L'huile végétale peut être modifiée par oxydation (huile végétale époxydée) ou par réaction avec l'acide acrylique ou l'anhydride maléique. Ainsi l'huile végétale modifiée peut être choisie parmi l'huile de soja époxydée, l'huile de soja maléinisée, l'huile de soja à base d'acrylique, l'huile de lin époxydée, l'huile de lin maléinisée, l'huile de lin à base d'acrylique époxydée, l'huile de ricin époxydée, l'huile de ricin maléinisée et l'huile de ricin à base d'acrylique.

Selon un premier mode de mise en oeuvre, la résine peut être un polyester ramifié obtenu par réaction de copolycondensation d'un monomère vinylique tel que le styrène modifié avec une huile végétale, en présence d'une amine ou d'une solution ammoniacale pour neutraliser les groupes acides au cours de la réaction de polymérisation et permettre l'incorporation du polymère dans l'eau. L'amine peut être choisie parmi la triéthylamine, la N,N-diméthyléthanolamine. la triméthylamine, l'éthanolamine, la N,N-diéthyléthanolamine, la N-méthyléthanolamine, la N-méthyléthanolamine, la monoisopropanolamine, la butanolamine, l'éthylènediamine, la diéthylamine et analogues.

Le monomère vinylique peut être choisi parmi les monomères (méth)acryliques et leurs esters, le styrène et ses dérivés alkylés, les éthers de vinyle, et leurs mélanges. On utilise par exemple le styrène ou un dérivé (méth)acrylique.

Selon un deuxième mode de réalisation, la résine peut être un polyester obtenu par réaction d'un monomère méth(acrylique) tel que l'acide acrylique, avec une huile végétale époxydée, éventuellement en présence d'un glycol.

Parmi les glycols, on citera l'éthylène glycol, le propylène glycol ou le butylène glycol.

Selon un mode de réalisation particulier, la résine est obtenue à partir du mélange de matières premières suivantes : huile de ricin, huile de soja, huile de lin, et acide acrylique ou styrène.

Selon un autre mode de réalisation particulier, la résine est une résine polyester qui peut être obtenue par réaction d'au moins un polyol avec un acide polycarboxylique ou un anhydride, éventuellement en présence d'un composé vinylique tel que décrit précédemment ou d'une huile végétale.

Le polyol peut être choisi parmi la glycérine, le triméthylolpropane, le diéthylène glycol, les saccharides tels que le pentaérythritol, le sorbitol et le mannitol, l'éthylène glycol, le néopentyl glycol, le 1,4-butanediol, le 1,6-hexanediol, le propylène glycol, le 1,3-butylène glycol, le pentanediol, le dipropylène glycol, le triéthylène glycol, le triméthyloléthane, le méthylglucoside, dipentaerythritol, et le sorbitol ou un mélange de ceux-ci.

L'acide polycarboxylique ou l'anhydride sont par exemple choisis parmi l'acide maléique, l'anhydride maléique, l'acide fumarique, l'acide caproïque, l'acide caprique, l'acide adipique, l'acide benzoïque, l'acide phtalique, l'anhydride phtalique, de l'acide m-phtalique, l'acide trimellitique et leurs mélanges. On préfère un anhydride d'acide aromatique.

La résine utilisée pour enrober l'engrais est de préférence sous la forme d'une dispersion aqueuse contenant par exemple entre 20 et 40% en poids d'eau, et éventuellement un autre solvant tel qu'un glycol (butylène glycol ou propylène glycol par exemple).

L'indice d'acide de la résine va par exemple de 10 à 350 mg de KOH/g de résine, de préférence de 20 à 200 mg de KOH/g de résine. Dans un mode de réalisation, l'indice va de 30 à 80 mg de KOH/g de résine, ou de 40 à 70 mg de KOH/g de résine.

La résine peut avoir un poids moléculaire moyen en poids (Mw) situé dans la gamme de 1.000 à 5.000.000 Dalton, par exemple de 3.000 à 1.000.000 Dalton, ou de 5.000 à 500.000 Dalton.

### Ciment

On entend par « ciment » au sens de l'invention, un mélange de silicates et d'aluminates de calcium, résultant de la combinaison de la chaux (CaO) avec de la silice (SiO₂), de l'alumine (Al₂O₃), et de l'oxyde de fer (Fe₂O₃). La chaux peut être fournie par des roches calcaires, tandis que l'alumine, la silice et l'oxyde de fer peuvent être fournis par des argiles. Les ciments magnésiens à base oxyde de magnésium sont exclus de cette définition.

Le ciment peut être non hydraté au sens où il ne contient que des traces d'eau infimes ; par exemple de l'eau n'est pas ajoutée au cours de l'étape d'enrobage avec le ciment.

Le ciment est de préférence choisi parmi les ciments de Portland, les ciments composés, un ciment alumineux ou un mélange comprenant l'un des différents types de ciments cités ci-dessus.

Selon la norme EN 197-1, un ciment composé comprend un ciment Portland et un ou plusieurs matériaux alternatifs tels qu'une cendre volante siliceuse et calcique, un laitier de haut-fourneau, une pouzzolane naturelle, synthétique calcinée, une fumée de silice, un filler calcaire ou un schiste calciné, ou un métakaolin.

En sidérurgie, le laitier est un sous-produit de la métallurgie contenant des oxydes métalliques, essentiellement des silicates, des aluminates et de la chaux, qui sont formés en cours de fusion ou d'élaboration de métaux par voie liquide.

Les pouzzolanes sont des composés du type alumino-silicates ou siliceux ou calcium alumino-silicates comme les argiles calcinées, les pouzzolanes naturelles ou synthétiques calcinées, les cendres volcaniques naturelles ou calcinées, les kaolins, les métakaolins, les cendres volantes de centrales thermiques, les cendres volantes de biomasse, les fumées de silice, les farines de quartz, les cendres de cosse de riz, les laitiers de hauts-fourneaux, les composés totalement amorphes comme des verres sodo-calciques broyés à haute teneur en silice, les poudres de verre, les cendres volcaniques naturelles ou calcinées.

Par « ciment Portland ou ciment de mélange», on désigne indifféremment tout ciment défini selon la norme EN 197-1 :2000. Toutes les combinaisons des ciments cités dans la norme EN 197-1:2000 sont également possibles pour préparer le ciment de l'invention. De préférence, le ciment Portland est sélectionné parmi au moins l'un des ciments suivants : un ciment Portland CEM I 52.5 N et R (norme EN 197-1:2000), et un ciment Portland CEM I 42.5 N et R (norme EN 197-1:2000), ciment Portland CEM I 32.5 N et R, et un ciment de mélange de type CEM II, III, IV ou V, par exemple un ciment de type CEM II /B-M, de type CEM II-Z-32,.

Au Brésil, les ciment de Portland sont classés en onze catégories : Ciment Portland commun (CP I), Ciment Portland composé (CP II) avec laitier (CP II-E), pouzzolane (CP II-Z) ou X (CP II-F), Ciment Portland de haut-fourneau (CP III), Ciment Portland pouzzolanique (CP IV), ciment Portland à haute résistance initiale (CP V-ARI), ciment Portland résistant aux sulfates (RS), ciment Portland à faible chaleur d'hydratation (BC), et Ciment Portland blanc (CPB). Le ciment utilisé dans le cadre de l'invention peut être un ciment CPB-40, un ciment CEM IV-32 ou CEM V-ARI ou CP-V-ARI RS.

Dans un mode de réalisation particulier, le ciment est un ciment de Portland de type CEM II /B-M (LL-V) 42.5 R CE CP2 NF, ou un ciment de mélange de type CEM IV-32 ou CP IV-32.

Le ciment peut être un ciment de Portland ou un ciment de mélange contenant 15 à 50% en poids de pouzzolanes.

Le ciment peut contenir avantageusement de 70 à 80% en poids de clinker, de 10 à 15% en poids de calcaire, de 10 à 15% en poids de cendre, et de 3 à 4% en poids de gypse.

Le ciment a de préférence une taille de particule inférieure à 100 µm (c'est-à dire qu'au moins 50%, de préférence au moins 99% en poids du ciment comprend des particules passant à travers un tamis de 100 µm) et supérieure à 5 microns. Le ciment a de préférence une taille moyenne de particule D50 inférieure à 50 µm et supérieure ou égale à 10 µm.

Le ciment selon l'invention peut avoir une masse volumique absolue supérieure ou égale à 2,6 g/cm³, et généralement une masse volumique absolue inférieure ou égale à 3,2 g/cm³. Sa surface spécifique Blaine (mesurée selon la norme NF 196-6) est de préférence supérieure à 4000 cm²/g, de préférence de l'ordre de 4400 cm²/g à 5200 cm²/g. La finesse Blaine est par exemple de l'ordre de 4500-4600 cm²/g.

### Produit fertilisant

Le produit fertilisant peut être choisi parmi les engrais et les amendements, et d'une manière générale tout autre composé soluble dans l'eau de nutrition des plantes.

Les engrais à enrober se présentent de préférence sous forme de granulés qui peuvent être obtenus par compression, prilling, granulation ou par mélange de ce type de granules. La taille des granulés est généralement de l'ordre de 1 à 5 mm.

L'engrais peut être choisi parmi les engrais simples ou composés, binaires ou ternaires.

L'engrais peut ainsi être un engrais NPK, au sens où il peut contenir une source d'azote et/ou une source de phosphore et/ou une source de potassium. L'engrais NPK contient de préférence une source de potassium.

Le produit fertilisant de l'invention peut par exemple contenir une ou plusieurs matières fertilisantes choisies parmi l'urée, les phosphates d'ammonium, le sulfate d'ammonium, le nitrate d'ammonium, le phosphate naturel, le superphosphate simple, le superphosphate triple, le chlorure ou le sulfate de potassium, le nitrate de magnésium, le nitrate de manganèse, le nitrate de zinc, le nitrate de cuivre, l'acide phosphorique et l'acide borique.

Le produit de l'invention peut se présenter sous la forme d'un produit choisi parmi les engrais racinaires, les engrais foliaires ou encore les solutions nutritives racinaires.

La présente invention trouve application dans la fertilisation d'une très grande variété de plantes. Parmi celles-ci, on citera en particulier :
- les plantes de grande culture telles que les céréales (blé, maïs),
- les protéagineux (pois),
- les oléagineux (soja, tournesol, colza),
- les plantes prairiales pour l'alimentation animale,
- les cultures spécialisées telles qu'en particulier les cultures sucrières (canne à sucre, betterave), le maraîchage (laitue, épinards, tomate, melon), la vigne, l'arboriculture (café, cacao, poire, pomme, nectarine), ou l'horticulture (rosiers).

Par l'expression "plante" on entend désigner dans la présente demande la plante considérée dans son ensemble, incluant son appareil racinaire, son appareil végétatif, les graines, semences et fruits.

Le ciment représente de préférence de 0,5 à 9 % en poids du poids de l'engrais non enrobé, de préférence de 1 à 7% en poids, de préférence encore de 3 à 5,5% en poids.

La résine sous la forme d'une émulsion utilisée pour enrober l'engrais représente par exemple de 0,1 à 5 % du poids de l'engrais non enrobé, de préférence de 0,5 à 4% en poids, par exemple entre 1,5 et 2%

Le ratio massique entre la résine et le ciment est de préférence compris entre 1/1 et 1/6, de préférence compris entre 1/2 et 1/5.

### Procédé de fabrication

L'invention a également pour objet un procédé de fabrication d'un produit fertilisant tel que décrit précédemment, en une étape de fabrication des granulés par granulation, compression ou prilling puis en une étape d'enrobage qui consiste à pulvériser une dispersion aqueuse de résine sur les particules d'engrais, puis à ajouter de la poudre de ciment non hydraté sur ces particules d'engrais recouvertes de résine.

L'étape d'enrobage est réalisée soit en sortie du procédé de formation des granulés soit en prenant des granulés déjà formés (blend). Dans tous les cas, les granulés ont de préférence une température de 30°C à 50°C à leur entrée dans l'enrobeur.

La méthode d'enrobage envisagée peut s'appliquer à tous les procédés d'enrobage dans lesquels les granulés sont mis en mouvement tels que les lits fluidisés, les tambours rotatifs, les mélangeurs à bras ou mélangeurs à cuves mobiles.

Selon un mode de réalisation particulier, la présence d'un agent de séchage tel qu'un sel de cobalt ou un sel de manganèse n'est pas nécessaire au cours de l'enrobage de l'engrais avec la résine.

La résine et le ciment peuvent être appliqués dans le même appareil et, de manière préférentielle, la résine sera pulvérisée sur les granulés avant d'y répartir le ciment. En outre, l'homme de l'art saura régler la température de pulvérisation de la résine de manière à obtenir une viscosité adaptée à une répartition homogène et rapide de la résine sur les granulés à enrober.

La résine en émulsion, qui est de préférence préchauffée, est pulvérisée uniformément sur la particule d'engrais à l'aide d'une buse pour former un film de polymère uniforme. La quantité de résine est ajustée par rapport à la taille, à la forme et à la rugosité des particules d'engrais.

L'engrais ainsi enrobé peut éventuellement subir un traitement anti-mottant connu de l'homme de l'art pour limiter l'agrégation des particules au cours du stockage du produit.

### Procédé d'épandage

L'invention a également pour objet un procédé d'épandage d'un produit fertilisant sur des sols susceptibles d'être soumis à une pluviométrie journalière comprise entre 150 et 500 mm d'eau et/ou à une pluviométrie annuelle comprise entre 2000 et 3000 mm d'eau, qui consiste à utiliser le produit fertilisant décrit précédemment, par exemple à une dose comprise entre 100 et 250 kg/ha.

### Description des Figures

**Figure 1****.** Conductivité électrique du lixiviat obtenu sur colonne de sol sableux et simulation d'une pluie intense (1 jour) pour un engrais enrobé selon l'invention (Echantillon C) et le même engrais non enrobé (Référence A)
**Figure 2****.** Conductivité électrique du lixiviat obtenu sur colonne de sol sableux et simulation d'une pluie modérée (10 jours) pour un engrais enrobé selon l'invention (Echantillon C) et le même engrais non enrobé (Référence A)
**Figure 3****.** Quantité de Potassium dans un lixiviat obtenu sur colonne de sol sableux et simulation d'une pluie intense (1 jour) pour un engrais enrobé selon l'invention (Echantillon B) et le même engrais non enrobé (Référence A)
**Figure 4****.** Quantité de Potassium dans un lixiviat obtenu sur colonne de sol sableux et simulation d'une pluie modérée (10 jours) pour un engrais enrobé selon l'invention (Echantillon B) et le même engrais non enrobé (Référence A)
**Figure 5****.** Quantité d'Azote dans un lixiviat obtenu sur colonne de sol sableux et simulation d'une pluie intense (1 jour) pour un engrais enrobé selon l'invention (Echantillon B) et le même engrais non enrobé (Référence A)
**Figure 6****.** Quantité d'Azote dans un lixiviat obtenu sur colonne de sol sableux et simulation d'une pluie modérée (10 jours) pour un engrais enrobé selon l'invention (Echantillon B) et le même engrais non enrobé (Référence A)
**Figure 7****.** Poids sec de pousses de soja exposées à quatre doses d'engrais selon l'invention (Echantillon B) ou d'engrais non enrobé (Référence A)
**Figure 8****.** Conductivité électrique d'un engrais NPK (7 0 20) enrobé selon l'invention et du même engrais enrobé d'une résine et de talc, fabriqué à l'échelle du laboratoire
**Figure 9****.** Conductivité électrique d'un engrais NPK (3 0 49) enrobé selon l'invention et du même engrais enrobé d'une résine et de talc, fabriqué à l'échelle du laboratoire

### Description des méthodes

### 1^{ère} Méthode d'évaluation du retard à la libération : mesure et suivi de la conductivité électrique:

### Matériel :

- Multimètre (pH, conductivité, DO...) HQ40d (Fournisseur : Hach) ;
- Bêcher 2L forme basse ;
- Agitateur magnétique IKA (Numéro labo 532),
- Barreau aimanté 70 mm de longueur, 10 mm de largeur,
- Entonnoir en inox avec des mailles fines traversé d'un tige (pour être posé sur le bêcher).

### Protocole :

- Remplir le bêcher avec 2L d'eau du robinet ;
- Mettre en agitation pour obtenir un léger vortex (vitesse 5 sur le IKA, environ 45 rpm),
- Poser l'entonnoir avec la tige sur le bêcher de manière à placer l'entonnoir au centre du bêcher,
- Plonger l'électrode de conductivité dans une zone définie, en « périphérie » et qui sera toujours la même pour toute la série de mesures. De manière préférentielle, l'électrode est située proche de la paroi du bêcher et sa pointe est placée au niveau de la graduation 1,5L
- Attendre que la mesure de conductivité de l'eau soit stable (souvent environ 450-470 µS/cm) et enregistrer cette conductivité de référence ;
- Tamiser le produit à analyser entre 3,15 et 4 mm ; puis peser 5,0 g de produit tamisé et les placer dans l'entonnoir;
- Lancer une mesure de conductivité en continu sur une durée de 30 minutes avec un point d'enregistrement toutes les 30 secondes ;
- A l'issue des 30 minutes, arrêter l'enregistrement des conductivités et tracer la courbe d'évolution de la conductivité de la solution en fonction du temps.
- relever particulièrement les valeurs des conductivités mesurées à t+3min, t+15min et t+30min et en rapportant les valeurs des conductivités mesurées sur l'engrais non enrobé aux valeurs des conductivités mesurées sur l'engrais enrobé, calculer le facteur de réduction de la conductivité dû à l'enrobage.

### 2^{ème} Méthode d'évaluation du retard à la libération : lixiviation dans une colonne de sol :

Le principe de ces tests est de déposer quelques granulés d'engrais sur une colonne de sol, de simuler une pluviométrie en arrosant ces granulés avec une fréquence et une quantité d'eau connue puis de récupérer en pied de colonne de sol les lixiviats pour analyse.

Les colonnes de sol sont des cylindres en PVC de 40 cm de haut et 7.5 cm de diamètre, remplis avec 2.3kg de terre ou de sable, et sur lesquels les granulés d'engrais sont déposés à raison de 100 kg/ha. Les ajouts d'eau simulent 3 types de pluie :
- des pluies intenses : 300 mm en « continu » ou 10 fois 30 mm en 1 journée ;
- des pluies douces : sur un sol toujours humide, 'pluies' de 300 mm en 30 jours à raison d'un ajout tous les 3 jours pendant 30 jours,
- une pluviométrie intermédiaire ou modérée : des 'pluies' de 300mm en 10 jours.

Pour chaque type de pluie, les lixiviats sont recueillis en pied de colonne et analysés en mesurant leur conductivité et leur teneur en N, P, K, S ou Mg, de manière à tracer l'évolution de la quantité de nutriment lessivé au cours du temps ou en fonction de la quantité de pluie.

### EXEMPLES

### Exemple 1 de l'invention : Revêtement de l'engrais NPK (03-00-49)

### A-Préparation

Une tonne (T) d'un engrais NPK (03-00-49 fabriqué par granulation humide), sous la forme de granulés, a été enrobé successivement avec une résine en dispersion aqueuse puis avec un ciment, dans des propositions variables. Un traitement anti-mottant peut éventuellement être effectué.

Le Ciment CEM II/B-M (LL-V) 42.5R CE CP2 NF est par exemple fourni par la Société Lafarge Ciments (finesse Blaine égale à 4542 cm²/g).

| Echantillon | resine | dose [kg/T] | ciment | dose [kg/T] |
|---|---|---|---|---|
| Référence A (non enrobé) | - | | - | |
| B | résine R | 15 | CEM II /B-M 42.5R | 40 |
| C | résine R | 10 | CEM II /B-M 42.5R | 30 |
| D | résine R | 10 | CEM II /B-M 42.5R | 30 |
| E | Emultech 040® | 10 | CEM II /B-M 42.5R | 70 |
| F | Polymul A40® | 10 | CEM II /B-M 42.5R | 30 |
| G | résine R | 10 | CPB-40 | 30 |
| H | résine R | 10 | CP V-ARI RS | 30 |
| I | résine R | 10 | CP IV-32 | 30 |

Résine R : fournie par la société Luengo Color, dispersion aqueuse d'un polyester ramifié obtenu par réaction de copolycondensation d'un monomère vinylique tel que le styrène modifié avec un mélange d'huile de soja, d'huile de lin et d'huile de ricin, en présence d'une solution ammoniacale. La dispersion contient aussi du butylène glycol.
Emultech 040® : résine fournie par la société WTechQuimica, dispersion aqueuse d'un polysaccharide
Polymul A40® : résine fournie par la société Biofragane, polyémulsion à base de polysaccharide

### B. Résultats de conductivité par dissolution dans l'eau:

Les essais ont été menés sur les échantillons Référence A à I selon la première méthode décrite précédemment.

| Echantillon | Conductivité | | | Facteur de réduction | | |
|---|---|---|---|---|---|---|
| | 3 min | 15 min | 30 min | 3 min | 15 min | 30 min |
| Référence A (non enrobé) | 1772 | 3332 | 3539 | | | |
| B | 56 | 171 | 269 | 31.8 | 19.5 | 13.2 |
| C | | | 2194 | | | 1.6 |
| D | 405 | 1283 | 1981 | 4.5 | 2.6 | 1.8 |
| E | 703 | 1895 | 2609 | 2.6 | 1.8 | 1.4 |
| F | 688 | 1963 | 2661 | 2.7 | 1.7 | 1.4 |
| G | 495 | 1521 | 2263 | 3.7 | 2.2 | 1.6 |
| H | 513 | 1409 | 1943 | 3.6 | 2.4 | 1.9 |
| I | 209.7 | 731 | 1189 | 8.7 | 4.6 | 3.0 |

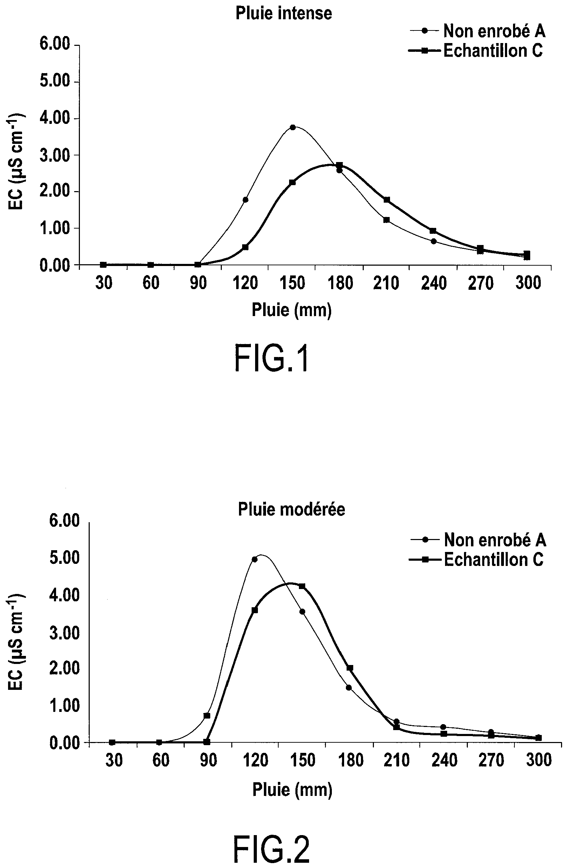

Résultats : La conductivité dans les lixiviats (CE) obtenus avec l'échantillon C commence à augmenter à partir du 4^{ème} jour (90 mm d'eau ajoutée) dans les deux régimes (pluie intense et pluie modérée). La conductivité des lixiviats de l'échantillon C est plus faible dans le régime pluie intense (1 jour). Le profil de libération est retardé.
La période de plus grande efficacité de l'échantillon C est comprise entre le 4^{ème} et le 7^{ème} jour. A partir du 8^{ème} jour, les différences sont faibles (figures 1 et 2).

L'engrais de l'invention permet bien de moduler la mise à disposition du potassium à la plante en fonction du volume des précipitations. Il est particulièrement efficace lorsque le sol est exposé à des pluies intenses. L'enrobage de l'invention permet de moduler le profil de libération de l'engrais en fonction des conditions météorologiques.

### C. Résultats sur colonne de sol pour les échantillons Référence A (non enrobé) et B

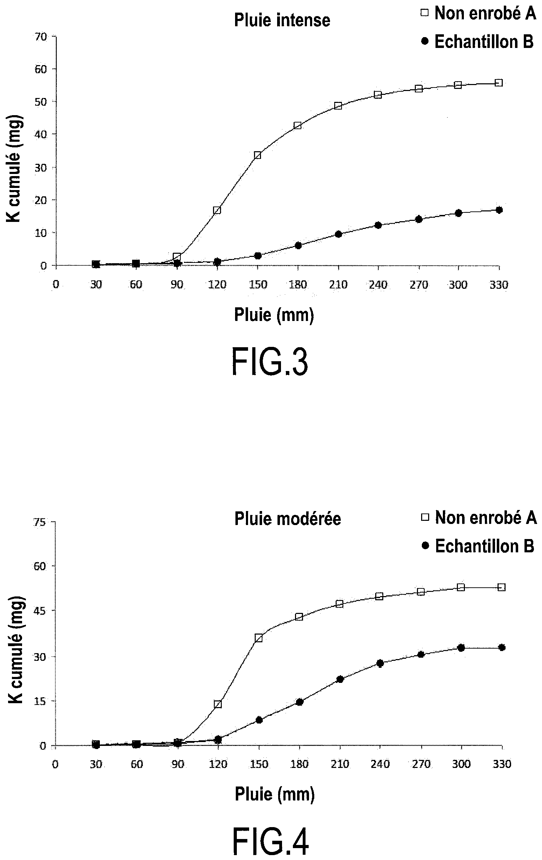

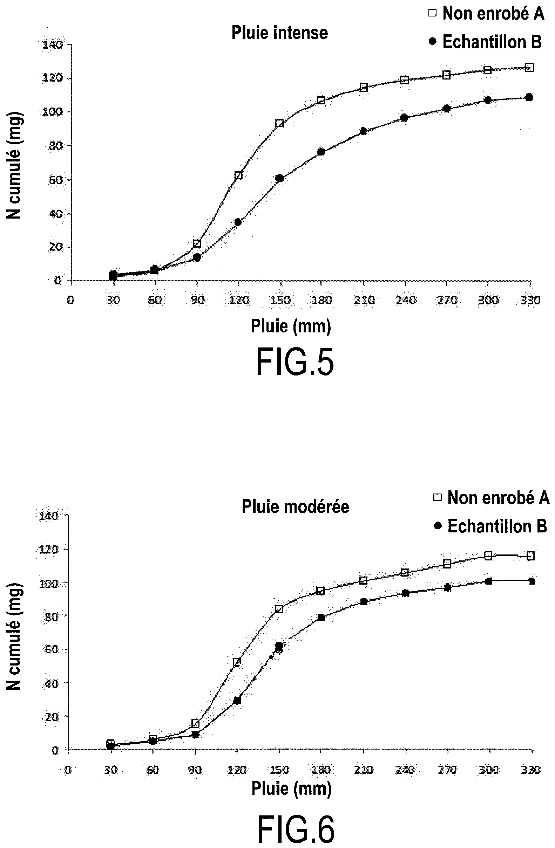

Les essais ont été menés sur l'échantillon B selon la deuxième méthode décrite précédemment, avec un sol sableux de la zone Iguazu (sable 92%, argile 6% et limon 2% ; pH_{(H2O)} 5,38; Ca 1.55; Mg 0,19; K 0,06 cmol_{c} dm⁻³; CEC 3,42 cmol_{c} dm⁻³; P 3,80 mg dm⁻³; Carbone organique 1,6 g dm⁻³). On a recueilli les lixiviats dans le substrat aux hauteurs 0-20 et 20-40 cm.
Résultats : La libération lente du potassium démontre l'efficacité de l'échantillon B : celle-ci est moindre en cas de pluie modérée (Figures 3 et 4). L'enrobage de l'invention ne semble pas retarder la dissolution de l'azote que ce soit en cas de pluie intense ou de pluie modérée (figures 5 et 6).
L'échantillon B relargue très lentement le potassium sous pluie intense, ce qui contribue à la réduction des pertes en calcium et magnésium interchangeables.
Les différences de profil de libération du potassium entre la régime intense et le régime modéré suggère que l'échantillon B est doté d'un équilibre stable entre protection et libération du potassium. Plus la pluie est intense, plus le potassium est protégé. Lorsque la pluie est modérée, la proportion de potassium libérée est plus importante.

L'engrais de l'invention permet bien de moduler la mise à disposition du potassium à la plante en fonction du volume des précipitations. Il est particulièrement efficace lorsque le sol est exposé à des pluies intenses.

### D. Résultats d'essais en plein champ sur soja et sur blé avec l'échantillon B

Des essais agronomiques ont ensuite été lancés sur soja et blé pour comparer l'efficacité des engrais enrobé et non enrobé.

Ces résultats sont probants sur soja et sur blé aux doses respectives de 150 kg/ha et 200 kg/ha.

### D.1. ESSAI SUR SOJA

L'objectif de cette étude était d'observer la croissance du soja en serre, et sa réponse en teneur de potassium minéral.

### Matériel et méthodes

- Engrais : Echantillons Référence A et B de l'Exemple 1
- Doses: 0,25 ; 0,50 ; 0,75 et 1,00 g d'engrais par pot équivalent à 75 ; 150 ; 225 et 300 kg d'engrais par hectare.
- Substrat : mélange de 15 % de terre d'argile avec 85 % de sable sédimentaire, 10 kg substrat / pot avec quatre répétitions.
- Mesures: poids sec des pousses, analyse chimique de la plante et analyse chimique du sol (60 jours après le traitement).
- Analyse statistique : analyse de la variance et le test t (P <0,05) pour comparer les types d'engrais et analyse de régression pour estimer la meilleure dose d'engrais. Les tiges sèches de soja étaient statistiquement différentes entre les traitements recevant 150 kg ha⁻¹ d'engrais de potasse. A cette dose, le test statistique (t) confirme la grande efficacité de l'échantillon B au cours des traitements.

### Résultats :

La croissance du soja en serre a été affectée par les types et les taux d'engrais potassiques. On a obtenu la plus forte croissance des plants de soja avec 150 kg ha⁻¹ (taux estimé 188 kg ha⁻¹) d'engrais de potasse.

A la dose de 150 kg / ha la croissance maximale a été obtenue avec l'engrais enrobé selon l'invention.

La concentration en poids sec des pousses en N, S, Ca et Mg n'a pas été affectée par les traitements, mais les quantités accumulées de N et de S ont été associées à la réponse de croissance.

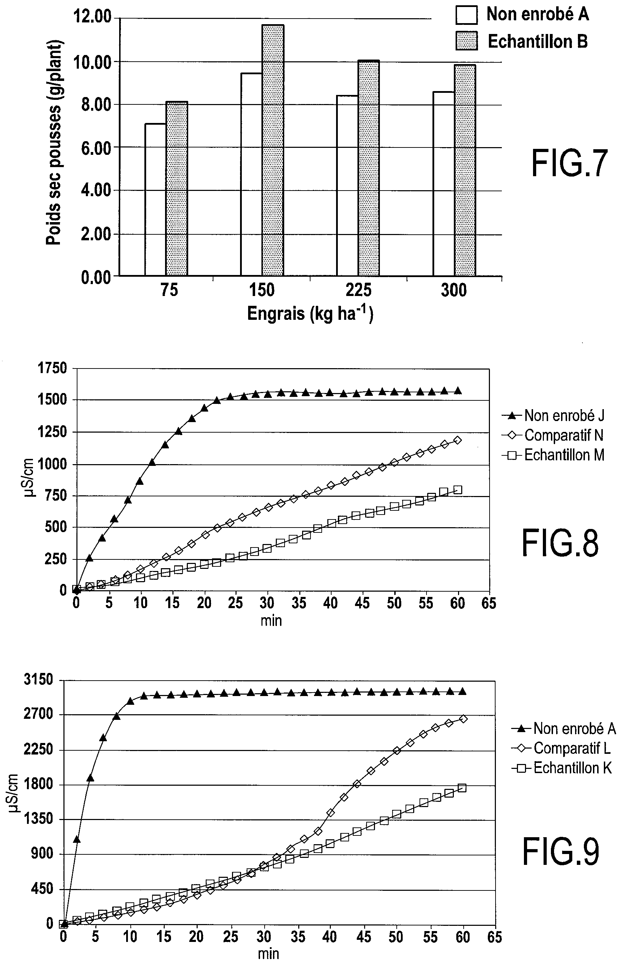

L'engrais enrobé selon l'invention appliqué à des taux faibles et intermédiaires fournit une absorption ultérieure de K par le soja par rapport à l'engrais non enrobé. La concentration en poids sec des pousses de soja en N, S, Ca et Mg n'a pas varié, et la croissance des graines de soja résulte sans doute de l'absorption plus élevée en K par les plantes sur provoque l'engrais de l'invention. Les résultats sont présentés sur la Figure 7.

### D.2 ESSAI SUR BLE

L'objectif de ce rapport est de présenter les résultats des teneurs en K dans les feuilles et dans les grains en réponse au traitement comparé avec les échantillons A et B.

### Matériel et méthodes

- Engrais : Echantillons A et B de l'Exemple 1
- Doses : 0 , 49 et 98 kg K₂O par hectare équivalent à 0; 100 et 200 kg d'engrais (3.0.49) par hectare.

### Composition chimique du sol :

pH(_{H2O}) 6.00; Ca 3.50; Mg 0.73; K 0.27; CES 7.01 cmol_{c} dm⁻³; P 16.50 mg dm⁻³; Carbone organique 11.7 g dm⁻³; sable 72%; argile 14% and limon 14% g.kg⁻¹. Mesures: concentration minérale des feuilles 30 jours après la fertilisation, composition chimique du sol et rendement en grains (kg ha⁻¹).

### Résultats

La concentration foliaire en N pour l'échantillon B était différente de celle de l'échantillon A seulement au taux 200 kg ha⁻¹ d'engrais potassique, mais elle ne différait pas selon les types d'engrais.

La concentration foliaire en K pour l'échantillon B était différente de celle de l'échantillon A, mais elle ne différait pas selon les types d'engrais.

Les taux d'engrais appliqués n'étaient pas suffisants pour augmenter la concentration en K dans le sol.

### Exemple 2 comparatif : Comparaison du talc et du ciment non hydraté

Un engrais NPK (03-00-49 ou 07-00-20), fabriqué par granulation humide, sous la forme de granulés a été enrobé successivement avec une résine en dispersion aqueuse puis avec un ciment non hydraté ou avec du talc.

Les échantillons suivants ont été préparés.

| Echantillon | Engrais | resine | dose [kg/T] | ciment | dose [kg/T] |
|---|---|---|---|---|---|
| Référence A | NK 3-0-49 | | | | |
| Référence J | NK 7-0-20 | | | | |
| K | NK 3-0-49 | résine R | 30 | ciment 42.5R | 80 |
| Comparatif L | NK 3-0-49 | résine R | 30 | Talc | 80 |
| M | NK 7-0-20 | résine R | 30 | ciment 42.5R | 80 |
| Comparatif N | NK 7-0-20 | résine R | 30 | Talc | 80 |

Les résultats des tests de conductimétrie réalisés selon la première méthode décrite précédemment ont été reportés sur les Figures 8 et 9.

## Revendications

1. Produit fertilisant à libération retardée composé de particules d'engrais enrobées
- d'une première couche comprenant une résine choisie parmi les résines polysaccharides et les résines obtenues par la copolymérisation d'une huile végétale et d'un composé choisi parmi les monomères vinyliques, les acides polycarboxyliques et les anhydrides, et
- d'une deuxième couche comprenant un ciment non hydraté.

2. Produit fertilisant selon la revendication 1 **caractérisé en ce que** l'engrais comprend au moins un composé choisi parmi les sels de potassium.

3. Produit fertilisant selon la revendication 1 **caractérisé en ce que** la résine est un polyester ramifié obtenu par réaction de copolycondensation du monomère vinylique modifié avec une huile végétale, en présence d'une amine.

4. Produit fertilisant selon la revendication 1 **caractérisé en ce que** la résine est un polyester obtenu par réaction de l'acide acrylique, avec une huile végétale époxydée, éventuellement en présence d'un glycol.

5. Produit fertilisant selon la revendication 1 **caractérisé en ce que** l'huile végétale est choisie parmi l'huile de ricin, l'huile de palme, l'huile de maïs, l'huile de soja, l'huile de colza, l'huile de tournesol, l'huile de graine de sésame, l'huile d'arachide, l'huile de carthame, l'huile d'olive, l'huile de graine de coton, l'huile de lin, l'huile de noix et l'huile de tung et leurs mélanges.

6. Produit fertilisant selon la revendication 1 **caractérisé en ce que** le ciment est choisi dans le groupe constitué des ciments de Portland.

7. Procédé de fabrication d'un produit fertilisant selon l'une des revendications 1 à 6, qui consiste à pulvériser une dispersion aqueuse de la résine sur les particules d'engrais, puis à ajouter la poudre de ciment non hydraté sur les particules d'engrais recouvertes de résine.

8. Procédé d'épandage d'un produit fertilisant sur des sols susceptibles d'être soumis à une pluviométrie annuelle comprise entre 2000 et 3000 mm, qui consiste à utiliser le produit fertilisant selon l'une des revendications 1 à 6.

## Patentansprüche

1. Düngungsprodukt mit verzögerter Freisetzung, das aus beschichteten Düngemittelteilchen
- mit einer ersten Schicht, umfassend ein Harz, ausgewählt aus Polysaccharidharzen und Harzen, erhalten durch Copolymerisation eines Pflanzenöls und einer Verbindung, ausgewählt aus Vinylmonomeren, Polycarbonsäuren und -anhydriden und
- einer zweiten Schicht, die einen nicht hydratisierten Zement enthält, besteht.

2. Düngungsprodukt nach Anspruch 1, **dadurch gekennzeichnet, dass** das Düngemittel mindestens eine Verbindung enthält, die aus Kaliumsalzen ausgewählt ist.

3. Düngungsprodukt nach Anspruch 1, **dadurch gekennzeichnet, dass** das Harz ein verzweigter Polyester ist, der durch eine Copolykondensationsreaktion des modifizierten Vinylmonomers mit einem Pflanzenöl in Gegenwart eines Amins erhalten wird.

4. Düngungsprodukt nach Anspruch 1, **dadurch gekennzeichnet, dass** das Harz ein Polyester ist, der durch Umsetzen von Acrylsäure mit einem epoxidierten Pflanzenöl, gegebenenfalls in Gegenwart eines Glykols, erhalten wird.

5. Düngungsprodukt nach Anspruch 1, **dadurch gekennzeichnet, dass** das Pflanzenöl ausgewählt ist aus Rizinusöl, Palmöl, Maisöl, Sojaöl, Rapsöl, Sonnenblumenöl, Sesamöl, Erdnussöl, Distelöl, Olivenöl, Baumwollsamenöl, Leinsamenöl, Walnussöl und Tungöl und Mischungen davon.

6. Düngungsprodukt nach Anspruch 1, **dadurch gekennzeichnet, dass** der Zement ausgewählt ist aus der Gruppe bestehend aus Portlandzementen.

7. Verfahren zur Herstellung eines Düngungsprodukts nach einem der Ansprüche 1 bis 6, wobei eine wässrige Dispersion des Harzes auf den Düngemittelteilchen versprüht und dann das nicht hydratisierte Zementpulver zu den mit Harz bedeckten Düngemittelteilchen gegeben wird.

8. Verfahren zum Verteilen eines Düngungsprodukts auf Böden, die einer jährlichen Regenmenge zwischen 2.000 und 3.000 mm ausgesetzt sein können, wobei das Düngungsprodukt nach einem der Ansprüche 1 bis 6 verwendet wird.

## Claims

1. A delayed-release fertilizing product comprising fertilizer particles that are coated
- with a first layer comprising a resin selected in the group consisting of polysaccharide resins, and resins that are obtained by copolymerization reaction of a vegetable oil with a compound selected in the group consisting of vinyl monomers, polycarboxylic acids and anhydrides, and
- with a second layer comprising a non-hydrated cement.

2. The fertilizing product as claimed in claim 1, **characterized in that** the fertilizer comprises at least one compound chosen from potassium salts.

3. The fertilizing product as claimed in claim 1, **characterized in that** the resin is a branched polyester resulting from copolycondensation reaction of a vinyl monomer with a vegetable oil, in the presence of an amine.

4. The fertilizing product as claimed in claim 1, **characterized in that** the resin is a polyester obtained by reacting acrylic acid with an epoxidized vegetable oil, optionally in the presence of a glycol.

5. The fertilizing product as claimed in claim 1, **characterized in that** the vegetable oil is chosen from castor oil, palm oil, corn oil, soybean oil, rapeseed oil, sunflower oil, sesame seed oil, peanut oil, safflower oil, olive oil, cotton seed oil, linseed oil, coconut oil and tung oil, and mixtures thereof.

6. The fertilizing product as claimed in claim 1, **characterized in that** the cement is selected in the group consisting of Portland cements.

7. A process for producing a fertilizing product as claimed in one of claims 1 to 6, comprising a step of spraying an aqueous dispersion of the resin onto the fertilizer particles, and a step of adding the non-hydrated cement powder to the resin-covered fertilizer particles.

8. A process for spreading a fertilizing product on soils that may be subjected to an annual rainfall of between 2000 and 3000 mm, said process consisting in using the fertilizing product as claimed in one of claims 1 to 6.
